# EUROPEAN PATENT APPLICATION

(11) **EP 1 342 768 A1**
(43) Date of publication of application: **10.09.2003**
(21) Application number: 01974663.5
(22) Date of filing: 03.10.2001
(51) Int. Cl.: C09K 11/02, C09K 11/06, C09K 11/08, C09C 3/06, C09C 3/10, D21H 21/48, B41M 3/14

(54) **PARTICLES EMITTING FLUORESCENCE BY IRRADIATION OF INFRARED RAY AND FORGERY PREVENTING PAPER USING THE SAME**

(30) Priority: 22.11.2000 JP 2000355224; 28.08.2001 JP 2001257506
(71) Applicant: Tokushu Paper Manufacturing Co. Ltd, Suntoh-gun, Shizuoka 411-0945 (JP)
(72) Inventor: MURAKAMI, Toru, Tokushu Paper Mfg. Co., Ltd., Sunto-gun, Shizuoka 411-0945 (JP); AKAHORI, Shin-ichi, Tokushu Paper Mfg. Co., Ltd, Sunto-gun, Shizuoka 411-0945 (JP)
(74) Representative: Kyle, Diana
(86) International application number: JP0108696
(87) International publication number: WO02042393

(57) **Abstract**

An infrared fluorescent particles emitting fluorescence upon irradiation with infrared rays, and anti-falsification paper in which the particles are contained and the particles emitting fluorescence at a specific hue can be clearly recognized visually upon irradiation with infrared rays are provided. The infrared fluorescent particles comprise granules of a powdery material and a coating layer of a water-insoluble infrared fluorescent pigment emitting fluorescence upon irradiation with infrared rays formed on the surface of the granule. Water resistance can be imparted to the particles by using a resin having reactive groups capable of reacting with hydroxyl groups of the powdery material in combination as a binder upon coating, or by incorporating an anionic binder or a cationic binder in the granules and incorporating a cationic material or an anionic material in the coating layer. When a water-insoluble ultraviolet fluorescent pigment emitting fluorescence upon irradiation with ultraviolet rays is mixed with the infrared fluorescent pigment and used together, particles in which the infrared fluorescent pigment emits fluorescence upon irradiation with infrared rays and the ultraviolet fluorescent pigment emits fluorescence upon irradiation with ultraviolet rays can be obtained. By inclusion of the infrared fluorescent particles in paper, anti-falsification paper excellent in the anti-falsification effect can be obtained.

## Description

### Field of the Invention

The present invention relates to infrared fluorescent particles emitting fluorescence upon irradiation with infrared rays, and it further relates to anti-falsification paper using the infrared fluorescent particles.

### Background Art

Various kinds of anti-falsification paper containing granular, fibrous or chipped materials having the property of emitting a visible light with a specific wavelength upon irradiation with ultraviolet rays are known. This anti-falsification paper has a feature in that upon irradiation with ultraviolet rays such as black light, a fluorescent material contained in the paper emits a light with a specific wavelength in the visible-light range, and the unique shape of the fluorescent material is detected whereby whether the paper is falsified or not can be judged.

The inventors of the present invention have proposed, in Japanese Patent Application No. 11-347237/1999, novel fluorescent particles that emit intense fluorescence upon irradiation with ultraviolet rays and a production process thereof, as well as anti-falsification paper capable of clearly recognizing particles emitting fluorescence of a specified hue upon irradiation with ultraviolet rays by incorporating the fluorescent particles into paper.

In this proposal, a water-insoluble fluorescent dyestuff and/or pigment that emits fluorescence upon irradiation with ultraviolet rays and a powdery material including starch, cellulose, other polysaccharides and saccharides are mixed and granulated. The surface of granules of the powdery material may be coated with the fluorescent dyestuff and/or pigment. In granulation or coating, a resin having reactive groups capable of reacting with hydroxyl groups of the powdery material is used in combination as a binder, whereby particles excellent in water resistance can be obtained. Further, the interaction between an anionic binder contained in the granules and a cationic material contained in the coating layer, or between a cationic binder contained in the granules and an anionic material contained in the coating layer can be utilized to impart water resistance to the particles.

### Disclosure of the Invention

As a result of a further study on the anti-falsification paper, the inventors have been struck by an idea that when particles emitting fluorescence upon irradiation with infrared rays can be produced, the particles can be used in similar applications, and thus have accomplished the present invention.

Therefore, an object of the present invention is to provide particles emitting fluorescence upon irradiation with infrared rays and anti-falsification paper using the particles by utilizing the technique proposed in the Japanese Patent Application No. 11-347237/1999 described above.

Infrared fluorescent particles according to the present invention comprise granules containing a powdery material and a coating layer containing a water-insoluble infrared fluorescent pigment emitting fluorescence upon irradiation with infrared rays formed on the surface of the granule.

In the present invention, infrared fluorescent particles having water resistance can be obtained by using a resin binder having two or more reactive groups capable of reacting with hydroxyl groups of the powdery material upon coating.

Namely, there is provided the infrared fluorescent particles according to the present invention, wherein the powdery material has hydroxyl groups, and the coating layer further contains a resin binder having two or more reactive groups capable of reacting with the hydroxyl groups of the powdery material.

Further, in the present invention, infrared fluorescent particles having water resistance can be obtained by utilizing, upon coating, interaction between an anionic binder or a cationic binder contained in the granule and a cationic material or an anionic material contained in the coating layer.

Namely, there is provided the infrared fluorescent particles according to the present invention, wherein the granules further contain an anionic binder, and the coating layer further contains a cationic material. There is also provided the infrared fluorescent particles according to the present invention, wherein the granules further contain a cationic binder, and the coating layer further contains an anionic material.

In the present invention, a water-insoluble ultraviolet fluorescent pigment emitting fluorescence upon irradiation with ultraviolet rays can be mixed and used in combination with the infrared fluorescent pigment described above.

Namely, there is provided the infrared fluorescent particles according to the present invention, wherein the coating layer further contains a water-insoluble ultraviolet fluorescent pigment emitting fluorescence upon irradiation with ultraviolet rays.

When the infrared fluorescent pigment and the ultraviolet fluorescent pigment are used in combination, it is preferred that a hue when the infrared fluorescent pigment emits fluorescence upon irradiation with infrared rays and a hue when the ultraviolet fluorescent pigment emits fluorescence upon irradiation with ultraviolet rays are substantially related to each other as additive complementary colors.

Furthermore, in the present invention, a powder whose unique shape can be recognized visually under microscopic observation may be further contained and used in combination in the coating layer.

Namely, there is provided the infrared fluorescent particles according to the present invention, wherein the coating layer further contains a powder whose unique shape can be recognized visually under microscopic observation.

The anti-falsification paper which is difficult to be falsified can be obtained by using the infrared fluorescent particles according to the present invention as described above.

Namely, anti-falsification paper according to the present invention comprises paper containing therein the infrared fluorescent particles described above.

In such an anti-falsification paper, the infrared fluorescent particles contained in paper can not be recognized or hardly recognized visibly upon irradiation with normal light (usual light such as natural light, light from an incandescent lamp and light from fluorescent lamps), but the particles emit fluorescents upon irradiation with infrared rays, thereby enabling to judge whether the paper is an original or an imitation.

Further, in the anti-falsification paper containing the infrared fluorescent particles which contains the infrared fluorescent pigment and the ultraviolet fluorescent pigment in the coating layer, only the infrared fluorescent pigment emits fluorescence but the ultraviolet fluorescent pigment does not emit fluorescence, when infrared rays are irradiated. On the other hand, when the ultraviolet rays are irradiated, only the ultraviolet fluorescent pigment emits fluorescence while the infrared fluorescent pigment does not emit fluorescence. As a result, a fantastic impression is emphasized and the anti-falsification effect can also be improved by double checking with infrared irradiation and ultraviolet irradiation.

Furthermore, in the anti-falsification paper containing the infrared fluorescent particles which contains the powder whose unique shape can be visually recognized under microscopic observation in the coating layer, the anti-falsification effect can further be improved by checking whether the unique powder shape can be recognized visually or not on the surface of the particles in the paper by microscopic observation of the paper.

### Brief Description of the Drawings

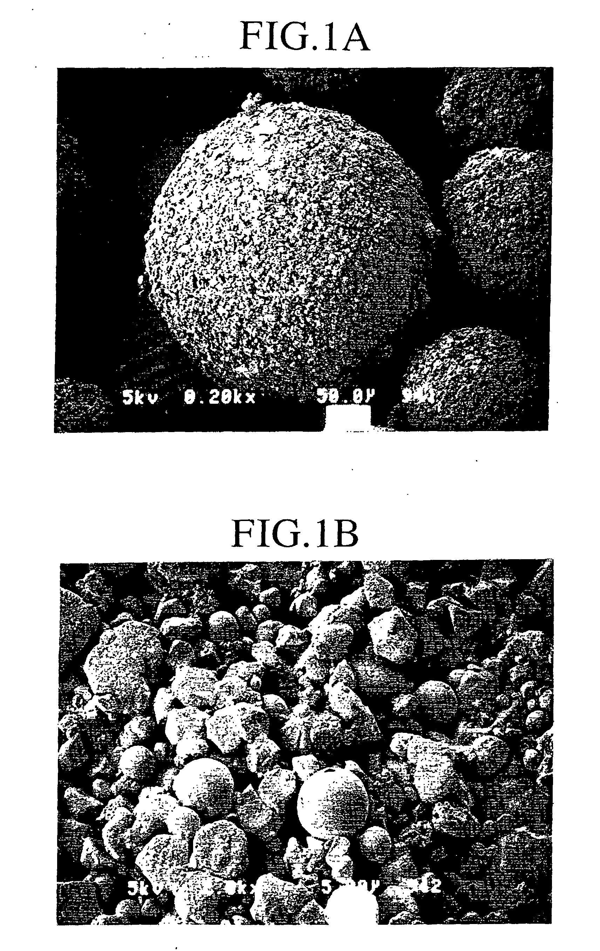

Fig. 1A is an electron microphotograph of entire particle of infrared and ultraviolet fluorescent particles with addition of glass beads (Example 3).
Fig. 1B is an enlarged electron microphotograph of a portion of the particle in Fig. 1A.

### Best Mode for Carrying Out the Invention

The powdery material used in the present invention can typically include starch. Specifically, the starch includes natural starch such as potato starch, corn starch, sweet potato starch, tapioca starch, sago starch, rice starch, amaranth starch, taro starch and Vaccaria pyramidata Medik starch, as well as processed starch thereof (dextrin, acid-decomposed starch, oxidized starch, alpha starch, etherified, esterified or cross-linked starch derivatives, grafted starch, wet-heated starch, etc.). As the powdery material, it is also possible to use grain flour such as wheat flour, rice flour and corn flour; water-insoluble powdery cellulose such as powdery cellulose, bacteria cellulose, fine fibrous cellulose and crystalline cellulose; wood meal; cellulose derivatives such as carboxymethyl cellulose, methyl cellulose, ethyl cellulose, hydroxyethyl cellulose, hydroxypropyl cellulose, hydroxyethylmethyl cellulose, hydroxypropylmethyl cellulose and quaternary cationic hydroxyethyl cellulose; polysaccharides and derivatives thereof, such as alginic acid, agar, funori, carrageenan, furcellaran, pectin, chitin, chitosan, guar gum, locust bean gum, tamarind gum, Arabia gum, tragacanth gum, karaya gum, tara gum, arum root pastes, Hibiscus Manihot L., pullulan and dextran; powdery sugars such as glucose, sucrose and lactose; powdery organic materials such as polyvinyl alcohol with high degrees of polymerization and high degree of saponification.

Further, powdery inorganic materials can also be used as the powdery material. The powdery inorganic materials include those known fillers such as titanium dioxide, silicates (kaolin, clay, bentonite, talc, synthetic aluminum silicate, synthetic calcium silicate, etc.), silicic acid (diatomaceous earth, silica powder, hydrous fine silicic acid powder and anhydrous fine silicic acid powder), calcium carbonate, zinc oxide, magnesium carbonate, calcium·magnesium carbonate, aluminum hydroxide, barium sulfate, calcium sulfate, calcium sulfite, iron oxide, etc.

These powdery materials can be used alone or as a mixture thereof. When powdery materials having hydroxyl groups, such as starch, grain flour, cellulose or other polysaccharides, sugars and polyvinyl alcohol are used, their use in combination with a resin binder having reactive groups capable of reacting with the hydroxyl groups is effective for conferring water resistance on the infrared fluorescent particles. Even if the resin binder is used in the coating layer together with the infrared fluorescent pigment, the intensity of fluorescence is not lowered and thus the resin binder can also act as extender fillers for the expensive infrared fluorescent pigment. Therefore, insofar as the object of the present invention is not inhibited, the resin binder can also be added to the coating solution at the time of coating.

The infrared fluorescent pigments used in the present invention are described hereinbelow. The infrared fluorescent pigments used in the present invention should be water-insoluble. This is because if they are water-soluble, the pigments are eluted from the infrared fluorescent particles added to pulp slurry during production of anti-falsification paper, thus failing to achieve the object of the present invention, as described below in details.

The term "water-insoluble" used in the present invention does not mean the properties of the infrared fluorescent pigment itself, but means that the infrared fluorescent pigment in the particles is not eluted into water after production of the infrared fluorescent particle.

As the infrared fluorescent pigment used in the present invention, either organic or inorganic infrared fluorescent pigment can be used. For example, in the inorganic infrared fluorescent pigments, those comprising a matrix of oxides or halides incorporating an activator consisting of rare earth ions as a light emitting source are known, which radiate fluorescent light in a visible region when electrons of rare earth ions transited to an excitation level by irradiation of infrared rays transit to a ground level. Known rare earth ions include, for example, ytterbium ion (Yb³⁺), praseodymium ion (Pr³⁺), neodymium ion (Nd³⁺), dysprosium ion (Dy³⁺), holmium ion (Ho³⁺), erbium ion (Er³⁺), thulium ion(Tm³⁺), etc.

The infrared fluorescent pigment emits fluorescence of a tone depending on the excitation wavelength in accordance with the kind of the activator incorporated and is usually expressed by separating into a matrix as a main ingredient and an activator dispersed in the matrix and by combining them with ":". For example, YF₃ : Yb + Er emits green or red fluorescence upon irradiation with infrared laser and YF₃ : Yb + Tm emits blue fluorescence upon irradiation with infrared rays.

In the present invention, these infrared fluorescent pigments are preferably those having an average particle diameter of 0.5 to 5 µm. If the average particle diameter is less than 0.5 µm, the intensity of fluorescence upon irradiation with infrared rays may be weakened. On the other hand, if the particle diameter exceeds 5 µm, emission of the fluorescence of the infrared fluorescent pigment contained in the coating layer tends to become uneven.

As described below, when anti-falsification paper is produced by permitting the infrared fluorescent particles of this invention to be contained in paper, the infrared fluorescent particles should have water resistance so as not to collapse in water. This is because there are cases in which the infrared fluorescent particles are added to a pulp slurry in the paper making step, in which the infrared fluorescent particles are sprinkled onto a wet paper in the paper making step, or in which the infrared fluorescent particles are added to a coating solution and then applied onto the surface of paper.

To impart water resistance to the infrared fluorescent particles, a resin having two or more reactive groups capable of reacting with the hydroxyl groups of the powdery material such as starch, grain flour, cellulose, other polysaccharides, saccharides or polyvinyl alcohol is used as the binder in the present invention. In the present specification, this kind of resin is referred to as "resin binder". Such resin binders include, for example, polyamine·epichlorohydrin-based resin, water-soluble alkylated amino resin, water-soluble methylated melamine-based resin, water-soluble phenol resin, urea resin, epoxylated polyamide resin, methylol polyacrylamide resin, etc.

To impart water resistance to the infrared fluorescent particles by using the resin binder, the surface of granules comprising the powdery material may be coated with the infrared fluorescent pigment by using the resin binder.

In an alternative method of imparting water resistance to the infrared fluorescent particles in the present invention, it is possible to adopt a method of utilizing the interaction between an anionic binder contained in the granule and a cationic material contained in the coating layer or the interaction between a cationic binder contained in the granule and an anionic material contained in the coating layer. That is, the powdery material is granulated with the anionic binder, and the surface of the granule is coated with the infrared fluorescent pigment by using the cationic material, whereby the anionic binder can be endowed with water resistance. Alternatively, the powdery material is granulated with the cationic binder, and the surface of the granule is coated with the infrared fluorescent pigment by using the anionic material, whereby the cationic binder can be endowed with water resistance.

The anionic binders used in the present invention include polysaccharides having anionic groups or synthetic polymers having anionic groups, such as alginic acid, sodium alginate, carboxymethyl cellulose, carboxymethyl starch, carboxymethyl guar gum, carboxymethyl xanthane gum, carboxymethyl tara gum, low methoxyl pectin, carrageenan, polyacrylic acid, sodium polyacrylate, etc.

As the cationic material which is coated together with the infrared fluorescent pigment on the surfaces of the granules in order to impart water resistance to the anionic binder, there can be used salts of polyvalent metal ions such as hydrochlorides, sulfates, carbonates, phosphates, lactates or hydroxides of calcium, magnesium, barium, boron, aluminum or titanium.

Further, cationic water-soluble polymers such as cationic polyacrylamide, polyethylene imine, polyvinyl pyrrolidone, cationic polyamide resin, polyallylamine, cationic polymer grafted starch powder, cationic starch, cationic guar gum, cationic xanthane gum, cationic tara gum, etc. can also be used as the cationic material.

As the cationic binder used in the present invention, the cationic water-soluble polymers exemplified above as the cationic material can be used. That is, cationic water-soluble polymers such as cationic polyacrylamide, polyethylene imine, polyvinyl pyrrolidone, cationic polyamide resin, polyallylamine, cationic polymer grafted starch powder, cationic starch, cationic guar gum, cationic xanthane gum, and cationic tara gum, etc. can be used as the cationic binder.

The polysaccharides having anionic groups or synthetic polymers having anionic groups, which are exemplified above as the anionic binder, can be used as the anionic material which is coated together with the infrared fluorescent pigment on the surface of the granules in order to impart water resistance to the cationic binder. That is, alginic acid, sodium alginate, carboxymethyl cellulose, carboxymethyl starch, carboxymethyl guar gum, carboxymethyl xanthane gum, carboxymethyl tara gum, low methoxyl pectin, carrageenan, polyacrylic acid, sodium polyacrylate, etc. can be used as the anionic material.

In the present invention, generally and conventionally used methods for granulation of starch, etc. can be used for granulation of the powdery material, or a mixture of the powdery material and the anionic binder or the cationic binder. That is, rolling granulation, extrusion granulation, spray-drying granulation, fluidized bed granulation, compression granulation, melt granulation, grinding granulation, stirring granulation, etc. can be used. Among these, spray-drying granulation has a feature that small spherical particles can be produced.

In the extrusion granulation, there is also the case where granulation is insufficient depending on the type or the amount of the binder used. To improve granulation in this case, generally employed binders such as hydroxypopyl cellulose, methyl cellulose, hydroxypropylmethyl cellulose, hydroxyethyl cellulose, oxidized starch, dextrin, etc. may be used as necessary in combination with the various binders described above, and then kneaded and extrusion-granulated. In general, granules obtained by extrusion granulation are used after regulation of the granules in a granule regulator, but if regulation of granules is insufficient due to the type or the amount of the binder used, a surfactant or a lubricant can be added as necessary to improve regulation of the granules.

When the surface of the granules is coated with the infrared fluorescent pigment in the present invention, it is possible to use a method wherein the granules are dried and then coated with the infrared fluorescent pigment together with the binder in the form of liquid (suspension), or the granules are coated with the infrared fluorescent pigment in the form of powder simultaneously with spraying the binder in a liquid form. As coating apparatus, not only specialized coating apparatus but granulators which are employed in the above-described granulation methods and capable of carrying out coating treatment (e.g., a rolling granulator, a fluidized bed granulator or a drying machine capable of spraying a liquid during drying) can also be used. Further, besides the specialized coating apparatus, any apparatus which is capable of carrying out coating treatment can be used.

The shape of the infrared fluorescent particles of the present invention produced in the method described above is varied depending on the granulation method employed. For example, the particles regulated after extrusion granulation have a cylindrical form in which corners were removed. Their section has a circular form or a nearly circular form, and when their length is identical or almost identical with their diameter, their emission of fluorescence seems to be in a spherical form, while when their length is longer than their diameter, their emission of fluorescence seems to be in an elliptical form. In addition, there is the tendency that the particles obtained by spray-drying granulation are in a nearly spherical form, those obtained by rolling granulation or stirring granulation are in a roughly spherical form, and those obtained by fluidized bed granulation are in a polygonal form like confetti, but depending on the conditions, the particles may assume a different shape even by the same granulation method.

The particle diameter of the infrared fluorescent particles can be suitably controlled in a range of several µm to several hundreds µm as necessary, but in the present invention, the particle diameter is controlled preferably in a range of 50 to 800 µm. If the particle diameter is less than 50 µm, the emission of fluorescence from the particles contained in paper tends to be hardly recognized visually even upon irradiation with infrared rays under normal light. The particles are easily recognized visually as their particle diameter is larger, while the part where the particles are present in paper is protruded thus worsening the feeling when touched by hand and adversely affecting the printability. In consideration of the balance between these two conditions, the particle diameter is controlled preferably in the range described above.

In the present invention, the infrared fluorescent particles may be used without being colored, or may be used after being colored. The infrared fluorescent particles which are not colored have white color or a nearly white hue under normal light, and thus if the particles are contained in paper not colored, it is difficult to recognize the presence of the infrared fluorescent particles in the paper. When the infrared fluorescent particles are colored, it becomes difficult to visually recognize the presence of the infrared fluorescent particles in the paper by regulating the hue of the infrared fluorescent particles so as to approach the color of the paper. In addition, when the colored infrared fluorescent particles are contained in paper not colored, the presence of the infrared fluorescent particles can be visually recognized under normal light.

In the present invention, when the infrared fluorescent particles are colored, the particles are preferably pale-colored such that their hue is not reproducible particularly by a color copying machine. Even if anti-falsification printed matter (e.g., gift certificate) produced by using anti-falsification paper containing the pale-colored infrared fluorescent particles is attempted to be falsified using a color copying machine, the density of the copied part corresponding to the printing part is raised if the copying density has been regulated so as to copy the infrared fluorescent particles, whereby it can be easily judged to be a falsified certificate.

In the present invention, the infrared fluorescent particles is colored preferably in dropout color in optical reading. The surface of an anti-falsification printed matter such as various gift certificates and tickets is often subjected to printing for OMR or OCR reading. This printing is made for automatic totaling after gift certificates and thickets were used. OMR is an abbreviation of "optical mark recognition", which is a generic term of a system in which the position of a mark provided on paper is recognized by irradiating paper with a light from a light source and receiving a light in a light-receiving element, whereby the position is linked by comparison to a numerical or symbol for totaling and classification, and paper used therein is called OMR paper. OCR is an abbreviation of "optical character recognition" and is a generic term of a system in which letters and numericals printed on paper are optically read, and paper used therein is called OCR paper.

For OMR and OCR reading, predetermined items such as frames, ruled lines and descriptions are often printed in dropout color on the surface of the paper. The dropout color is a color by which the printed part is recognized by human eyes to be a completely different color from the white background by combination of a light source and a light-receiving element, whereas due to disappearance of this difference in the light-receiving element, the printed part can be perceived to be the same as the white background. In the case of OMR paper or OCR paper, a color light in a suitable wavelength region is set by combination of the type of the light source and the light-receiving element employed, and the dropout color corresponding thereto shall be used. In JIS C6253 "Print Specifications for Optical Character Recognition", light-receiving devices corresponding to 8 types of wavelength regions are specified.

In the present invention, since the hue of the infrared fluorescent particles is made as the dropout color in optical reading, the part where the particles are present in the paper is recognized by human eyes to be a completely different color from the white background, but due to disappearance of this difference in the light-receiving element, it can be perceived to be the same as the white background in OMR or OCR reading.

When the infrared fluorescent particles used in the present invention are colored such that their hue emitted upon irradiation with infrared rays is different from their hue under normal light, the effect of improving not only fantastic impression but also the ability to prevent falsification is enhanced. For example, the infrared fluorescent particles seem to be colored red under normal light, and seem to be colored green or blue under the irradiation with infrared rays, to emphasize the fantastic impression.

The infrared fluorescent particles can be colored by a method of using a coloring agent together in various steps for production of the infrared fluorescent particles or by a method of staining the infrared fluorescent particles after production with a dyestuff or the like. As the coloring agent, there can be used coloring dyestuffs such as direct dyestuffs, acid dyestuffs and basic dyestuffs, and inorganic and organic coloring pigments. If the infrared fluorescent particles are subjected to light-resistant coloring, an inorganic pigment is preferably used as the coloring agent.

When the water-insoluble and organic solvent-soluble dyestuff is used as the coloring agent for the infrared fluorescent particles, the following unique effect can be demonstrated. That is, these colored particles are contained in paper, and the paper is subjected to printing to produce an anti-falsification printed matter, and if the printed indication on this printed matter is attempted to be falsified by using an organic solvent, the dyestuff soluble in the organic solvent is eluted from the infrared fluorescent particles and its traces diffused therearound can be visually recognized, whereby the presence of falsification can be reliably recognized.

In the infrared fluorescent particles of the present invention having the structure wherein the coating layer containing the infrared fluorescent pigment is formed on the surface of the granules containing the powdery material, there can be made an embodiment wherein a dyestuff insoluble in water but soluble in organic solvent is incorporated together with the powdery material in the granules, while an infrared fluorescent pigment having white color or a nearly white hue under normal light is used as the infrared fluorescent pigment in the coating layer. In such infrared fluorescent particles, since the color of the organic solvent-soluble dyestuff in the granules is concealed by the infrared fluorescent pigment having white color or a nearly white hue in the coating layer, when these particles are contained in paper followed by printing to produce an anti-falsification printed matter (e.g., passport), the presence of the infrared fluorescent particles is hardly recognized visually under normal light, thus making it difficult to judge whether means of preventing falsification is taken or not, and the effect of preventing falsification can thereby be further improved. Further, when it is attempted to falsify the printed indication by using an organic solvent, the organic solvent-soluble dyestuff is eluted from the core granules of the infrared fluorescent particles, and its traces diffused therearound can be visually recognized and thus the presence of falsification can be reliably recognized.

The dyestuffs insoluble in water but soluble in organic solvent include dyestuffs based on, for example, monoazo, disazo, metal complex salt type monoazo, anthraquinone, phthalocyanine and triallyl methane and the like. The "Senryo Binran" (Handbook of Dyestuffs) describes which organic solvents dissolve these dyestuffs, and their type can be specified by color index (C. I. Number).

In the present invention, the infrared fluorescent pigment and the ultraviolet fluorescent pigment can be also used in combination by mixing the infrared fluorescent pigment with a water-insoluble ultraviolet fluorescent pigment emitting fluorescence upon irradiation with ultraviolet rays and coating the mixture on the surface of the granules. It is thus possible to produce infrared and ultraviolet fluorescent particles in which only the infrared fluorescent pigment emits fluorescence while the ultraviolet fluorescent pigment does not emit fluorescence when infrared rays are irradiated, whereas only the ultraviolet fluorescent pigment emits fluorescence while the infrared fluorescent pigment does not emit fluorescence when the ultraviolet rays are irradiated. (In this specification, both the infrared and ultraviolet fluorescent particles and the infrared fluorescent particles are collectively referred to as "infrared fluorescent particles".) In the case where the anti-falsification paper is produced by containing such infrared fluorescent particles in paper, when infrared rays are irradiated on the paper, the infrared fluorescent pigment in the particles emits, for example, yellow-green fluorescence, and when ultraviolet rays are irradiated on the paper, the ultraviolet fluorescent pigment in the particles emit fluorescence of different hue, for example, of red. As a result, the fantastic impression is improved and the anti-falsification effect can also be improved by double checking with the infrared irradiation and ultraviolet irradiation.

In the case where the infrared fluorescent pigment and the ultraviolet fluorescent pigment are caused to emit fluorescence of different hues, it is preferred that these hues are substantially related to each other as additive complementary colors. The additive complementary colors refer to such a relation between two colors that when two colors (color lights) are mixed they form an achromatic color. Colors situates opposite to each other on a Munsell color ring are in such a relation, for example, blue-green color to red, or yellow-green color to purple. In the present invention, the fantastic impression or the anti-falsification effect can further be enhanced by making a hue of fluorescence emitted from the infrared fluorescent pigment upon irradiation with infrared rays and a hue of fluorescence emitted from the ultraviolet fluorescent pigment upon irradiation with ultraviolet rays are related as additive complementary colors. The complementary relation referred to in the present invention may also include a combination approximate to the complementary relation, for example, a hue of nearly green and a hue of nearly red.

Specifically, the ultraviolet fluorescent pigments can include zinc sulfide activated with copper, silver, manganese, etc; zinc silicate activated with manganese, etc.; zinc sulfide activated with silver, copper, etc.; calcium sulfide activated with cadmium, bismuth, etc.; strontium sulfide activated with samarium, cerium, etc.; calcium tungstate activated with lead, etc.; Sr₅(PO₄)₃Cl activated with europium, etc.; Zn₂GeO₂ activated with manganese, etc; Y₂O₂S activated with europium, etc.; and Y₂O₃ activated with europium, etc. The ultraviolet fluorescent pigments described above usually having an average particle diameter of 0.5 to 5 µm are preferably used in the same manner as the infrared fluorescent pigment.

Further, in the present invention, the infrared fluorescent pigment or a mixture of the infrared fluorescent pigment and the ultraviolet fluorescent pigment is mixed with a powder having a unique shape which can be recognized visually under microscopic observation, and the resulting mixture may be coated on the surface of granules. In the case where anti-falsification paper is produced by containing the thus obtained infrared fluorescent particles in paper, the anti-falsification effect can be enhanced further by microscopically observing the paper to check whether the powder of unique shape can be recognized visually or not on the surface of the particles in the paper.

Specific examples of the powder exhibiting the unique shape under microscopic observation can include, for example, calcium carbonate of a calcite crystal structure exhibiting a spindled shape, mica powder or pearl pigment exhibiting a flaky shape, wollastonite or potassium titanate exhibiting a needle shape, glass beads, silica beads or balloons (generic term for spherical hollow bodies) exhibiting a spherical shape, spherical powder of metals such as aluminum and titanium, spherical organic fillers such as of styrene, formal resin, polymethyl methacrylate or polyamide imide type material, various kinds of pollens, bacterial cellulose, diatomaceous earth and the like, and at least one of them is used in the present invention. Particularly, when two or more kinds of them are used, variation for the unique powder shape can be increased so much. A powder having a particle diameter usually of several µm to several hundreds µm are used. Unique shape can be hardly observed by microscope when the particle size is smaller than the range, whereas the powder is difficult to be produced when the particle size is larger than the range.

Production of the anti-falsification paper using the infrared fluorescent particles of the present invention is described below. For production of the anti- falsification paper of the present invention, paper-making pulp such as needle-leaved tree bleached kraft pulp (NBKP), broad-leaved tree bleached kraft pulp (LBKP), needle- leaved tree bleached sulfite pulp (NBSP), thermo- mechanical pulp (TMP), etc. are used as major materials. Further, non-wood pulp such as a cotton, hemp, bamboo, straw and kenaf and synthetic fibers are used as necessary, and a dry paper strength agent, a wet paper strength agent, a sizing agent, a fixing agent, a retention aid, a drainage aid, a defoaming agent, a dyestuff and a coloring agent are added thereto as necessary to prepare a paper stock. The infrared fluorescent particles are added to the paper stock in a chest, etc., and a known paper machine such as a Fourdrinier paper machine or a cylinder paper machine is used for paper making usually at a freeness of 550 to 250 ml C.S.F. to produce the anti-falsification paper of the present invention.

In the case where the infrared fluorescent particles were contained in paper but exposed to the surface, there may occur the problem that the infrared fluorescent particles may fall out from the paper when the paper is subjected to printing. This phenomenon tends to occur in offset printing due to the large tack of aprinting ink. Accordingly, in the case of paper subjected to offset printing, it is preferable that ant-falsification paper is formed as combination paper made of three or more paper layers, and the infrared fluorescent particles are contained in the inner layer. Even in the case of such combination paper, infrared rays pass through the front and back outermost layers to arrive at the inner layer upon irradiation with infrared rays, to excite the infrared fluorescent pigment contained in the infrared fluorescent particles in the inner layer and permit it to emit fluorescence. However, if the basis weight of the front and back outermost layers increase, infrared rays hardly pass therethrough, and thus the basis weight of the outermost layer is preferably in the range of 15 to 150 g/m².

For production of anti-falsification paper containing the infrared fluorescence particles, it is possible to adopt not only the method of adding the infrared fluorescent particles previously to the paper stock as described above, but also a method of adding the infrared fluorescent particles to the paper stock passing in a Fourdrinier paper machine or in a cylinder paper machine, a method of introducing the infrared fluorescent participles into a vat of the cylinder paper machine, or a method of sprinkling the infrared fluorescent particles intermittently or in a stripe form via a nozzle onto wet paper on a machine wire. In this case, the paper surface can be coated, for example, by using a size press, etc. with starch, polyvinyl alcohol, various surface sizing agents, etc. Further, the paper can be subjected to machine calendering or super calendaring as necessary, to thereby improve the surface smoothness.

In addition, the anti-falsification paper of the present invention can be produced also by a so-called coating method. That is, the infrared fluorescent particles are added to a conventional coating binder such as starch, polyvinyl alcohol, synthetic rubber latex, synthetic resin emulsion, etc. to prepare a coating solution containing the infrared fluorescent particles, or a coating solution mainly containing these binders and white pigments for coating such as kaolin and calcium carbonate is prepared. The coating solution can be coated to the surface of paper by using a known coater such as an air knife coater. Further, the coating solution containing the infrared fluorescent particles may be coated in a stripe form on the surface of paper by using a stripe coater.

Further, anti-falsification paper containing the infrared fluorescent particles can also be produced by coating thin paper such as Japanese paper with a coating solution containing the infrared fluorescent particles, the binder, etc., and then dividing the coated thin paper into thin pieces, followed by incorporation into paper. In the anti-falsification paper thus produced, only the part where the thin pieces were incorporated has the unique effect of emitting fluorescence in a shape of the thin pieces, for example, in a circular, square, rectangular or asterisk shape.

In addition, the anti-falsification paper of the present invention can be produced also by a so-called printing method. That is, the infrared fluorescent particles are mixed with suitable ink vehicles and printed on the surface of paper by using known printing machines such as a screen printing machine and a gravure printing machine. Printing in this case may be conducted on the whole surface of paper or in a certain pattern. In the anti-falsification paper thus produced, only the printed part has the unique effect of emitting fluorescence depending on the printing pattern.

Furthermore, the anti-falsification paper of the present invention can also be produced by a so-called immersion method. That is, the infrared fluorescent particles are added to known binders such as a synthetic rubber latex or a synthetic resin emulsion and impregnated into paper.

The present invention is described in more details hereinbelow with reference to Examples. In the Examples, weight parts and weight % mean dry weight parts and dry weight %, respectively.

### [EXAMPLE 1]

### Production example of infrared fluorescent particles colorless under normal light and emitting blue fluorescence upon irradiation with infrared rays:

100 parts by weight of corn flower was spray-dried with 10 parts by weight of polyethylene imine [cationic binder] ("Epomine P-1000", manufactured by Nippon Shokubai Co., Ltd.) as the binder, to obtain fine granular starch.

The surface of the fine granular starch was subjected by a fluidized bed granulation coating device ("Flow Coater", manufactured by Freunt Sangyo Co., Ltd.) to fluidized bed coating with a coating solution containing 25 parts by weight of an infrared fluorescent pigment (YF₃: Yb + Tm particles, average particle diameter of 0.5 µm) and 2 parts by weight of carboxymethyl starch [anionic material] dispersed in 50 parts by weight of water, to obtain spherical infrared fluorescent particles with a particle diameter of 200 to 500 µm.

The infrared fluorescent particles were colorless under normal light and emitted blue fluorescence upon irradiation with infrared rays (infrared laser beam at 950 nm wavelength, 0.5 W power which was used also in the Examples below). 5 parts by weight of the infrared fluorescent particles were dispersed in 100 parts by weight of water and stirred at a rotational speed of 300 rpm for 10 minutes, but did not collapse.

### [EXAMPLE 2]

### Production example of infrared and ultraviolet fluorescent particles colorless under normal light and emitting yellow green fluorescence upon irradiation with infrared rays and emitting red fluorescence upon irradiation with ultraviolet rays:

100 parts by weight of corn flower was spray-dried with 10 parts by weight of polyethylene imine [cationic binder] ("Epomine P-1000") as the binder, to obtain fine granular starch.

The surface of the fine granular starch was subjected by a fluidized bed granulation coating device ("Flow Coater") to fluidized bed coating with a coating solution containing 10 parts by weight of an infrared fluorescent pigment (trademark; "IRA-GII4", manufactured by Nemoto Tokushu Kagaku Co., Ltd.) (emitting yellow green fluorescence upon irradiation with infrared laser beam at 950 nm wavelength, average particle diameter of 1.0 µm), 30 parts by weight of a ultraviolet fluorescent pigment (Eu activated Y₂O₂S particles, average particle diameter of 2.2 µm) and 2 parts by weight of carboxymethyl starch [anionic material] dispersed in 50 parts by weight of water, to obtain spherical infrared and ultraviolet fluorescent particles with a particle diameter of 200 to 500 µm.

The infrared and ultraviolet fluorescent particles were colorless under normal light, but emitted yellow green fluorescence upon irradiation with infrared rays and emitted red fluorescence upon irradiation with ultraviolet rays (black light which was also used in the Examples below). 5 parts by weight of the infrared and ultraviolet fluorescent particles were dispersed in 100 parts by weight of water and stirred at a rotational speed of 300 rpm for 10 minutes, but did not collapse.

### [EXAMPLE 3]

### Production example of infrared and ultraviolet fluorescent particles with addition of unique shape powder:

Infrared and ultraviolet fluorescent particles were produced in the same manner as in Example 2 except for adding 20 parts by weight of glass beads (trademark: "MB-10", manufactured by Toshiba Co.) to the coating solution of Example 2.

The infrared and ultraviolet fluorescent particles were colorless under normal light, but emitted yellow green fluorescence upon irradiation with infrared rays and emitted red fluorescence upon irradiation with ultraviolet rays. 5 parts by weight of the infrared and ultraviolet fluorescent particles were dispersed in 100 parts by weight of water and stirred at a rotational speed of 300 rpm for 10 minutes, but did not collapse. Further, when the particles were observed under an electron microscope, spherical shape inherent to glass beads could be observed. Fig. 1A and Fig. 1B show the electron microphotographs in this case.

### [EXAMPLE 4]

### Production example of infrared and ultraviolet fluorescent particles colored with water-insoluble but organic solvent-soluble dyestuff:

Infrared and ultraviolet fluorescent particles were produced in the same manner as in Example 2 except for adding 2 parts by weight of a water-insoluble but organic solvent-soluble red dyestuff (trademark "Kayaset Red SF-4G", manufactured by Nippon Kayaku Co., Ltd.) to the coating solution of Example 2.

The infrared and ultraviolet fluorescent particles were colorless under normal light, but emitted yellow green fluorescence upon irradiation with infrared rays and emitted red fluorescence upon irradiation with ultraviolet rays. When acetone was dropped onto the particles, the red dyestuff was eluted from the particles.

5 parts by weight of the infrared and ultraviolet fluorescent particles were dispersed in 100 parts by weight of water and stirred at a rotational speed of 300 rpm for 10 minutes, but did not collapse.

### [EXAMPLE 5]

### Production example of anti-falsification paper:

20 parts by weight of NBKP and 80 parts by weight of LBKP were beaten in 350 ml C.S.F., and 10 parts by weight of clay, 0.3 part by weight of a paper strength agent (trademark "Polystron 191", manufactured by Arakawa Kagaku Kogyo Co., Ltd.), 1.0 part by weight of a sizing agent (trademark "Size pine E" manufactured by Arakawa Kagaku Kogyo Co., Ltd.) and a suitable amount of aluminum sulfate were added thereto to prepare a paper stock.

Paper having a basis weight of 110 g/m² was produced by a Fourdrinier paper machine from the paper stock. During this paper making, the infrared fluorescent particles obtained in Example 1 (screened to have a particle diameter of 300 to 500 µm by a screening machine) were sprinkled onto the whole surface of paper web formed on the machine wire in an amount of 0.5 weight % based on the paper to produce anti-falsification paper. After the paper was passed through a drying zone in the paper machine and then subjected to machine calendering, the presence of the infrared fluorescent particles could not be perceived even by touching the surface of the paper by hand.

In the resulting anti-falsification paper, the infrared fluorescent particles could not be visually recognized under normal light, and the particles emitting blue fluorescence could be visually recognized upon irradiation with infrared rays.

When a solution prepared by dissolving 5.7 parts by weight of potassium iodide and 5 parts by weight of iodine in 1000 ml water and diluting it suitably with water was dropped and spread onto the surface of this anti-falsification paper, the infrared fluorescent particles were dyed violet.

### [EXAMPLE 6]

### Production example of anti-falsification paper:

20 parts by weight of NBKP and 80 parts by weight of LBKP were beaten in 250 ml C. S. F., and 10 parts by weight of clay, 0.3 part by weight of a paper strength agent (trademark "Polystron 191"), 1.0 part by weight of a sizing agent (trademark "Size pine E") and a suitable amount of aluminum sulfate were added thereto to prepare a paper stock.

The infrared and ultraviolet fluorescent particles obtained in Example 2 above were added to the paper stock such that the amount of the particles in paper was 0.5 % by weight, and anti-falsification paper having a basis weight of 100 g/m² was produced in a usual manner by using a Fourdrinier paper machine. After the paper was passed through a drying zone in the paper machine and then subjected to machine calendering, the presence of the infrared and ultraviolet fluorescent particles could not be perceived even by touching the surface of the paper by hand.

In the resulting anti-falsification paper, the particles were not recognized visually under normal light, but the particles emitting yellow green fluorescence upon irradiation with infrared rays could be recognized visually and the particles emitted red fluorescence upon irradiation with ultraviolet rays.

### [EXAMPLE 7]

### Production example of anti-falsification paper:

The infrared and ultraviolet fluorescent particles obtained in Example 3 above were mixed in an amount of 0.1 weight % with a coating solution containing 50 parts by weight of kaolin (trademark "UW90", manufactured by Engerhard Co., Ltd), 50 parts by weight of calcium carbonate (trademark "Tama Pearl TP222H", manufactured by Okutama Kogyo Co., Ltd.), 0.25 part by weight of a dispersant (sodium tripolyphosphate), 6 parts by weight of oxidized starch (manufactured by Nichiden Kagaku Co., Ltd.) and 14 parts by weight of a styrene-butadiene copolymer latex (trademark "Nipol LX407C", manufactured by Nippon Zeon Co., Ltd.). The thus obtained coating solution was applied in an amount of 15 g/m² onto the surface of base paper by a curtain flow coater, followed by super calendering to produce anti-falsification paper. The presence of the infrared and ultraviolet fluorescent particles could not be perceived even by touching the surface of the paper by hand.

In the resulting anti-falsification paper, the particles could not be visually recognized under normal light, but the particles emitting yellow green fluorescence could be visually recognized upon irradiation with infrared rays and the particles emitted red fluorescence upon irradiation with ultraviolet rays. When the particles exposed on the surface of the paper were observed under an electron microscope, the spherical shape inherent to glass beads and clearly distinguishable from the powder shape of the infrared fluorescent pigment and the ultraviolet fluorescent pigment could be observed.

### [EXAMPLE 8]

### Production example of anti-falsification paper:

Anti-falsification paper was produced by using a Fourdrinier paper machine in the same manner as in Example 6 except for adding the infrared and ultraviolet fluorescent particles obtained in Example 4 to the paper stock prepared in Example 6.

In the resulting anti-falsification paper, the particles could not be visually recognized under normal light, but the particles emitting yellow green fluorescence could be recognized upon irradiation with infrared rays and the particles emitted red fluorescence upon irradiation with ultraviolet rays. When the surface of the paper was rubbed several times with absorbent cotton impregnated with acetone, the red dyestuff was eluted from the particles in the paper, and a large number of red spots appeared on the surface of the paper.

### Industrial Applicability of the Invention

According to the present invention described above , the following effects are provided.
1) The infrared fluorescent particles of the present invention can keep the shape of the particle without being molten at high temperature such as in a drying zone in a paper making machine. Therefore, when these particles are incorporated in paper in a paper making process, the particles of unique shape emitting fluorescence at a specific hue can be visually recognized upon irradiation with infrared rays, and can thus be applied preferably to the use of anti-falsification paper.
2) Even when a granular infrared fluorescent pigment itself is attempted to be contained in paper, its specific gravity in the case of an inorganic infrared fluorescent pigment is as high as about 4 to 5, and thus there is a great disadvantage that the pigment easily settles during transfer of slurry containing the pigment. Further, most of those available commercially have a diameter as small as 0.5 to 5 µm, and thus there is another disadvantage that their florescence cannot be visually recognized even upon irradiation with infrared rays. On the other hand, the specific gravity of the infrared fluorescent particles obtained in the present invention is in the range of 1.2 to 1.8, and particles having a particle diameter of 50 µm or more can be easily obtained, and therefore the above-mentioned disadvantages can be solved.
3) By using a material having hydroxyl group as the powdery material and a resin having reactive group capable of reacting with the hydroxyl group as the binder, in combination, infrared fluorescent particles excellent in water resistance can be obtained. Further, the interaction between an anionic binder and a cationic material or between a cationic binder and an anionic material can also be utilized to obtain infrared fluorescent particles excellent in water resistance.
4) When the infrared fluorescent particles containing starch and polyvinyl alcohol colored by an iodine-containing aqueous solution in the coating layer are applied to anti-falsification paper, a feature that the starch and polyvinyl alcohol in the particles can be easily detected is provided, whereby the source of the paper can be easily identified.
5) In the present invention, a coloring agent can be used in combination in the production of the infrared fluorescent particles, or the infrared fluorescent particles can be colored. When such infrared fluorescent particles are contained in paper, the particles colored in a specific hue can be visually recognized under a normal light, while the particles can be colored in a different hue upon irradiation with infrared rays, and therefore, anti-falsification paper of fantastic feeling can be produced. Further, when the coloring agent is used for dropout color in optical reading, anti-falsification paper suitable for OCR reading or OMR reading can be produced.
6) A coloring agent comprising a dyestuff insoluble in water but soluble in organic solvent can be used for coloring the infrared fluorescent particles, and these particles are contained in paper, and the resulting paper is subjected to printing to produce anti-falsification printed matter. If it is attempted to falsify this printed matter by using an organic solvent, the coloring agent of the dyestuff is eluted from the infrared fluorescent particles, and its traces diffused therearound can be visually recognized. By utilizing this property, the anti-falsification paper of the present invention can be used for anti-falsification printed matter which might be falsified easily.
7) In the case where the infrared fluorescent pigment and the ultraviolet fluorescent pigment are mixed and used together, when the hue of the fluorescence of the infrared fluorescent pigment upon irradiation with infrared rays (for example, yellow green color) is made different from the hue of the fluorescence of the ultraviolet fluorescent pigment upon irradiation with ultraviolet rays (for example, red), the fantastic impression is enhanced and the anti-falsification effect can also be improved further by double checking with the infrared irradiation and ultraviolet irradiation.
8) In the case where powders appearing in a unique shape under microscopic observation are mixed and used together in the coating layer, the anti-falsification effect can further be improved by checking whether the powder of unique shape is visible or not under microscopic observation.
9) Anti-falsification printed matter can be obtained by applying predetermined printing to the anti-falsification paper of the present invention containing the infrared fluorescent particles, and it can be utilized effectively in the fields requiring anti-falsification such as gift certificates, stock certificates, bank notes, identification cards, various kinds of tickets, passports, etc.

## Claims

1. Infrared fluorescent particles comprising granules containing a powdery material and a coating layer containing a water-insoluble infrared fluorescent pigment emitting fluorescence upon irradiation with infrared rays formed on the surface of the granule.

2. Infrared fluorescent particles according to claim 1, wherein the powdery material has hydroxyl groups, and the coating layer further contains a resin binder having two or more reactive groups capable of reacting with the hydroxyl groups of the powdery material.

3. Infrared fluorescent particles according to claim 1, wherein the granules further contain an anionic binder, and the coating layer further contains a cationic material.

4. Infrared fluorescent particles according to claim 1, wherein the granules further contain a cationic binder, and the coating layer further contains an anionic material.

5. Infrared fluorescent particles according to any one of claims 1 to 4, wherein the coating layer further contains a water-insoluble ultraviolet fluorescent pigment emitting fluorescence upon irradiation with ultraviolet rays.

6. Infrared fluorescent particles according to claim 5, wherein a hue when the infrared fluorescent pigment emits fluorescence upon irradiation with infrared rays and a hue when the ultraviolet fluorescent pigment emits fluorescence upon irradiation with ultraviolet rays are substantially related to each other as additive complementary colors.

7. Infrared fluorescent particles according to any one of claims 1 to 6, wherein the coating layer further contains a powder whose unique shape can be recognized visually under microscopic observation.

8. Infrared fluorescent particles according to any one of claims 1 to 7, wherein the infrared fluorescent particles are colored.

9. Infrared fluorescent particles according to claim 8, wherein the infrared fluorescent particles are pale-colored to such an extent that the hue thereof is not reproducible by a color copying machine.

10. Infrared fluorescent particles according to claim 8 or 9, wherein the infrared fluorescent particles are colored in dropout color in optical reading.

11. Infrared fluorescent particles according to any one of claims 8 to 10, wherein the infrared fluorescent particles is colored such that the hue of fluorescence emitted upon irradiation with infrared rays appears differently from the hue under normal light.

12. Infrared fluorescent particles according to claim 8, wherein a dyestuff insoluble in water but soluble in organic solvent is used as a coloring agent for the infrared fluorescent particles.

13. Anti-falsification paper comprising paper containing therein the infrared fluorescent particles according to any one of claims 1 to 12.

14. Anti-falsification paper according to claim 13, wherein the anti-falsification paper is formed from combination paper having at least three paper layers, and the infrared fluorescent particles are contained in the inner layer.

15. Anti-falsification paper according to claim 14, wherein a weight basis of the outermost paper layer is 15 to 150 g/m².
